# EUROPEAN PATENT SPECIFICATION

(11) **EP 3 450 920 B1**
(45) Date of publication and mention of the grant of the patent: **24.05.2023**
(21) Application number: 18196256.4
(22) Date of filing: 30.12.2010
(51) Int. Cl.: G01C 21/36

(54) **METHODS AND SYSTEMS OF PROVIDING INFORMATION USING A NAVIGATION APPARATUS**
VERFAHREN UND SYSTEME ZUR BEREITSTELLUNG VON INFORMATIONEN UNTER VERWENDUNG EINER NAVIGATIONSVORRICHTUNG
PROCÉDÉS ET SYSTÈMES D'INFORMATION UTILISANT UN APPAREIL DE NAVIGATION

(43) Date of publication of application: 06.03.2019
(62) Divisional of application: 10798363.7
(73) Proprietor: TomTom Navigation B.V., 1011 AC Amsterdam (NL)
(72) Inventor: VADILLO PALACIO, Ana, 1011 AC Amsterdam (NL); BUKOWSKA, Magdalena, 1011 AC Amsterdam (NL); van HEMERT, Jasper-Michiel, 1011 AC Amsterdam (NL); ZIEZOLD, Hendrik, Sebastian, 1011 AC Amsterdam (NL); ALDERS, Michel, 1011 AC Amsterdam (NL); GEUL, Sandra, 1011 AC Amsterdam (NL); ABEN, Sjoerd, 1011 AC Amsterdam (NL); BENNINK, Jeroen, 1011 AC Amsterdam (NL)
(74) Representative: Swindell & Pearson Limited

(56) References cited:
- EP-A1- 1 623 875
- EP-A1- 1 734 492
- EP-A1- 2 150 034
- WO-A1-2008/002126
- US-A1- 2002 032 524
- US-A1- 2003 052 797
- US-A1- 2008 238 933

## Description

### Field of the Invention

This invention relates to methods and systems for providing warnings to a user of a navigation apparatus. The invention also extends to a navigation apparatus arranged to carry out the methods of the present invention. Illustrative embodiments of the invention relate to navigation apparatus in the form of portable navigation devices (so-called PNDs), in particular PNDs that include Global Positioning System (GPS) signal reception and processing functionality, and to methods of operating such devices. The invention is also applicable to navigation apparatus which forms part of an integrated navigation system, e.g. an in-vehicle navigation system, and methods of operating the same.

### Background to the Invention

The present invention is directed to methods of providing warnings to a user of a navigation apparatus, and to a navigation apparatus arranged for carrying out the steps of the methods in accordance with embodiments of the invention. The navigation apparatus may comprise navigation apparatus of any suitable form as discussed above, and in more detail below. One illustrative embodiment of the apparatus is a portable navigation device. Portable navigation devices (PNDs) that include GPS (Global Positioning System) signal reception and processing functionality are well known and are widely employed as in-car or other vehicle navigation systems.

In general terms, a modern PNDs comprises a processor, memory (at least one of volatile and non-volatile, and commonly both), and map data stored within said memory. The processor and memory cooperate to provide an execution environment in which a software operating system may be established, and additionally it is commonplace for one or more additional software programs to be provided to enable the functionality of the PND to be controlled, and to provide various other functions.

Typically these devices further comprise one or more input interfaces that allow a user to interact with and control the device, and one or more output interfaces by means of which information may be relayed to the user. Illustrative examples of output interfaces include a visual display and a speaker for audible output. Illustrative examples of input interfaces include one or more physical buttons to control on/off operation or other features of the device (which buttons need not necessarily be on the device itself but could be on a steering wheel if the device is built into a vehicle), and a microphone for detecting user speech. In a particularly preferred arrangement the output interface display may be configured as a touch sensitive display (by means of a touch sensitive overlay or otherwise) to additionally provide an input interface by means of which a user can operate the device by touch.

Devices of this type will also often include one or more physical connector interfaces by means of which power and optionally data signals can be transmitted to and received from the device, and optionally one or more wireless transmitters/receivers to allow communication over cellular telecommunications and other signal and data networks, for example Wi-Fi, Wi-Max GSM and the like.

PND devices of this type also include a GPS antenna by means of which satellite-broadcast signals, including location data, can be received and subsequently processed to determine a current location of the device.

The PND device may also include electronic gyroscopes and accelerometers which produce signals that can be processed to determine the current angular and linear acceleration, and in turn, and in conjunction with location information derived from the GPS signal, velocity and relative displacement of the device and thus the vehicle in which it is mounted. Typically such features are most commonly provided in in-vehicle navigation systems, but may also be provided in PND devices if it is expedient to do so.

The utility of such PNDs is manifested primarily in their ability to determine a route between a first location (typically a start or current location) and a second location (typically a destination). These locations can be input by a user of the device, by any of a wide variety of different methods, for example by postcode, street name and house number, previously stored "well known" destinations (such as famous locations, municipal locations (such as sports grounds or swimming baths) or other points of interest), and favourite or recently visited destinations.

Typically, the PND is enabled by software for computing a "best" or "optimum" route between the start and destination address locations from the map data. A "best" or "optimum" route is determined on the basis of predetermined criteria and need not necessarily be the fastest or shortest route. The selection of the route along which to guide the driver can be very sophisticated, and the selected route may take into account existing, predicted and dynamically and/or wirelessly received traffic and road information, historical information about road speeds, and the driver's own preferences for the factors determining road choice (for example the driver may specify that the route should not include motorways or toll roads).

In addition, the device may continually monitor road and traffic conditions, and offer to or choose to change the route over which the remainder of the journey is to be made due to changed conditions. Real time traffic monitoring systems, based on various technologies (e.g. mobile phone data exchanges, fixed cameras, GPS fleet tracking) are being used to identify traffic delays and to feed the information into notification systems.

PNDs of this type may typically be mounted on the dashboard or windscreen of a vehicle, but may also be formed as part of an on-board computer of the vehicle radio or indeed as part of the control system of the vehicle itself. The navigation device may also be part of a hand-held system, such as a PDA (Portable Digital Assistant) a media player, a mobile phone or the like, and in these cases, the normal functionality of the hand-held system is extended by means of the installation of software on the device to perform both route calculation and navigation along a calculated route.

Route planning and navigation functionality may also be provided by a desktop or mobile computing resource running appropriate software. For example, the Royal Automobile Club (RAC) provides an on-line route planning and navigation facility at http://www.rac.co.uk, which facility allows a user to enter a start point and a destination whereupon the server to which the user's PC is connected calculates a route (aspects of which may be user specified), generates a map, and generates a set of exhaustive navigation instructions for guiding the user from the selected start point to the selected destination. The facility also provides for pseudo three-dimensional rendering of a calculated route, and route preview functionality which simulates a user travelling along the route and thereby provides the user with a preview of the calculated route.

In the context of a PND, once a route has been calculated, the user interacts with the navigation device to select the desired calculated route, optionally from a list of proposed routes. Optionally, the user may intervene in, or guide the route selection process, for example by specifying that certain routes, roads, locations or criteria are to be avoided or are mandatory for a particular journey. The route calculation aspect of the PND forms one primary function, and navigation along such a route is another primary function.

During navigation along a calculated route, it is usual for such PNDs to provide visual and/or audible instructions to guide the user along a chosen route to the end of that route, i.e. the desired destination. It is also usual for PNDs to display map information on-screen during the navigation, such information regularly being updated on-screen so that the map information displayed is representative of the current location of the device, and thus of the user or user's vehicle if the device is being used for in-vehicle navigation.

An icon displayed on-screen typically denotes the current device location, and is centred with the map information of current and surrounding roads in the vicinity of the current device location and other map features also being displayed. Additionally, navigation information may be displayed, optionally in a status bar above, below or to one side of the displayed map information, examples of navigation information include a distance to the next deviation from the current road required to be taken by the user, the nature of that deviation possibly being represented by a further icon suggestive of the particular type of deviation, for example a left or right turn. The navigation function also determines the content, duration and timing of audible instructions by means of which the user can be guided along the route. As can be appreciated a simple instruction such as "turn left in 100 m" requires significant processing and analysis. As previously mentioned, user interaction with the device may be by a touch screen, or additionally or alternately by steering column mounted remote control, by voice activation or by any other suitable method.

A further important function provided by the device is automatic route re-calculation in the event that: a user deviates from the previously calculated route during navigation (either by accident or intentionally); real-time traffic conditions dictate that an alternative route would be more expedient and the device is suitably enabled to recognize such conditions automatically, or if a user actively causes the device to perform route re-calculation for any reason.

It is also known to allow a route to be calculated with user defined criteria; for example, the user may prefer a scenic route to be calculated by the device, or may wish to avoid any roads on which traffic congestion is likely, expected or currently prevailing. The device software would then calculate various routes and weigh more favourably those that include along their route the highest number of points of interest (known as POis) tagged as being for example of scenic beauty, or, using stored information indicative of prevailing traffic conditions on particular roads, order the calculated routes in terms of a level of likely congestion or delay on account thereof. Other POI-based and traffic information-based route calculation and navigation criteria are also possible.

Although the route calculation and navigation functions are fundamental to the overall utility of PNDs, it is possible to use the device purely for information display, or "free-driving", in which only map information relevant to the current device location is displayed, and in which no route has been calculated and no navigation is currently being performed by the device. Such a mode of operation is often applicable when the user already knows the route along which it is desired to travel and does not require navigation assistance.

Devices of the type described above, for example the GO950 LIVE model manufactured and supplied by TomTom International B.V., provide a reliable means for enabling users to navigate from one position to another.

While navigation systems are of great utility in providing route guidance, and traffic information, the Applicant has identified that further improvements would be desirable in relation to providing information or instructions to a user of a navigation apparatus. As mentioned above, navigation apparatus may provide users with information or instructions of various types. Some information or instructions are of an advisory or informative nature, while other information or instructions may be more critical, such that it is important or essential that the user notes or follows the information or instructions. Examples of such information or instructions are navigation instructions, alerts or warnings. There are certain EU safety guidelines governing the way in which in-vehicle information such as route guidance instructions may be displayed or otherwise to a user to reduce the possibility of driver distraction and to avoid detracting from the primary task of driving. Information should be easily comprehendible by a range of drivers, and in a range of conditions. Nonetheless, there is a risk that drivers may be overloaded with instructions, making it difficult to assimilate the information being provided, and identify and interpret more critical information or instructions. This may be a particular concern in relation to older drivers.

The present invention seeks to provide improved methods of providing warnings using a navigation apparatus, and to improved navigation apparatus implementing such methods.

WO2008002126 A1 discloses a navigation device, for providing warnings when a detection point of a speed trap is approached, comprising a processor unit arranged to communicate with memory unit and to receive positional information from a positioning device. The memory unit may comprise a speed trap database, comprising at least one detection point of a location of a speed trap. The navigation device is arranged to provide a warning when one of the at least one detection point is approached. The memory unit is further arranged to comprise at least a further detection point associated with at least one of the stored detection points, both relating to a same point to point speed trap. The navigation device is arranged to provide a warning when the further detection point is approached or has been passed.

EP1734492 A1 discloses a navigation device which appropriately notifies a user of information. When traffic information and feature information are acquired, the traffic information and the feature information are associated with an ID number in accordance with time information and a type contained in the traffic information and the feature information to generate guidance having a single data structure. Calculated based on the time information of the guidance is an elapsed time up to a current time counted by a timer. Regarding the guidance having exceeded a predetermined time period, an icon of such guidance is displayed in a display pattern different from the guidance not having exceeded the predetermined time period, where the icon is displayed with higher transparency. Accordingly, the user can easily recognize the reliability of the traffic information and the feature information. The information is thus appropriately notified to the user.

US2002032524 A1 discloses a routing display for a navigation system in a road vehicle in the form of an electro-optical display can be driven by a routing computer and uses symbols to display a direction of current travel and a direction which is to be taken after a turn-off point relative to one another. The sizes of the two symbols relative to one another is changed such that the relative size of the symbol marking the direction which is to be taken after the turn-off point increases as the turn-off point is approached. Accordingly, when the driver looks at the routing display, he is given the visual impression that he is approaching the turn-off point.

### Summary of the Invention

The present invention is as set out in the independent claims.

In accordance with an aspect of the invention, there is provided a method comprising:
providing, to a user via a navigation apparatus (200), a visual warning regarding presence of a safety camera or a speed limit change at a given location on a digital map, the visual warning including information regarding a current speed of travel (43) and/or a maximum permitted speed of travel (42) at the given location;
monitoring a current position of the navigation apparatus;
monitoring a remaining distance between the current position and the given location;
determining that the remaining distance between the current position and the given location decreased to a predetermined distance; and
enhancing the visual warning in a stepped manner as the remaining distance decreases by triggering an enhancement of the visual warning in response to said determining, wherein the enhancement is achieved by changing the appearance of the visual warning on a display of the navigation apparatus, and wherein a degree and/or rate of enhancement of the visual warning depends on:
   a relative difference between the current speed and the maximum permitted speed of travel at the given location, and
   a distance between a current location of the navigation apparatus and the given location.

In accordance with another aspect of the invention, there is provided a navigation apparatus (200) comprising:
a display (240) for displaying a digital map to a user,
means (210, 230) for accessing digital map data and causing a digital map to be displayed to a user via the display,
a user interface (220) operable by a user to enable the user to interact with the apparatus,
means (210, 240) for providing a visual warning regarding presence of a safety camera or a speed limit change at a given location on the digital map, the visual warning including information regarding a current speed of travel and/or a maximum permitted speed of travel at the given location,
means (210, 250) for monitoring a current position of the navigation apparatus;
means (210) for monitoring a remaining distance between the current position and the given location;
means (210) for determining that the remaining distance between the current position and the given location decreased to a predetermined distance; and
means (210, 240) for enhancing the visual warning in a stepped manner as the remaining distance decreases by triggering an enhancement of the visual warning in response to said determining, wherein the enhancement is achieved by changing the appearance of the visual warning on the display, and wherein a degree and/or rate of enhancement of the visual warning depends on:
   a relative difference between the current speed and the maximum permitted speed of travel at the given location, and
   a distance between a current location of the navigation apparatus and the given location.

In accordance with another aspect of the invention, there is provided a computer program product comprising computer readable instructions that, when executed by one or more processors (210) of an apparatus (200), cause the apparatus to perform the above method.

In accordance with a first aspect of the disclosure, not encompassed by the wording of the claims but considered as useful for understanding the invention, there is provided a method comprising;
providing, via a navigation apparatus, a navigation instruction, warning or alert to a user,
wherein the method comprises enhancing the navigation instruction, warning or alert in a continuous or stepped manner as a given location is approached.

In accordance with a second aspect of the disclosure, not encompassed by the wording of the claims but considered as useful for understanding the invention, there is provided a navigation apparatus comprising;
a display for displaying a digital map to a user,
means for accessing digital map data and causing a digital map to be displayed to a user via the display, and a user interface operable by a user to enable the user to interact with the apparatus, wherein the apparatus further comprises means for providing a navigation instruction, warning or alert to a user, and means for enhancing the navigation instruction, warning or alert in a continuous or stepped manner as a given location is approached.

It will be appreciated that the disclosure in the second and further aspects may comprise any or all of the features described in respect of the method of the first aspect of the disclosure, and vice versa. Thus, if not explicitly stated, the method may comprise the steps of controlling the apparatus to perform any of the functions described in relation to the apparatus, and the apparatus of the disclosure may be arranged to perform any of the method steps herein described. The apparatus may comprise a set of one or more processors arranged to carry out the steps mentioned. Any step may be carried out by any one of the processors, or by multiple processors. It will be appreciated that the method may be a method of operating a navigation apparatus.

In accordance with the disclosure, the given location is a given location on a digital map representing a location in the real world i.e. representing the position thereof. The method may involve enhancing the instruction, warning or alert as a position signal indicates that the given location on the digital map is approached i.e. as a current position as indicated by the position signal approaches the location on the digital map. Enhancement of the instruction, warning or alert may be triggered as the current location indicated by the position signal approaches the given location on the digital map i.e. with decreasing distance to the location as represented by the digital map. The position signal may be a GPS signal, and the current position is then a current GPS position.

In accordance with an aspect of the disclosure, not encompassed by the wording of the claims but considered as useful for understanding the invention, there is provided a method comprising;
providing, via a navigation apparatus, a navigation instruction, warning or alert to a user,
wherein the method comprises enhancing the navigation instruction, warning or alert in a continuous or stepped manner as a given location on a digital map representing a real location is approached.

In accordance with a second aspect of the disclosure, not encompassed by the wording of the claims but considered as useful for understanding the invention, there is provided a navigation apparatus comprising;
a display for displaying a digital map to a user,
means for accessing digital map data and causing a digital map to be displayed to a user via the display, and a user interface operable by a user to enable the user to interact with the apparatus, wherein the apparatus further comprises means for providing a navigation instruction, warning or alert to a user, and means for enhancing the navigation instruction, warning or alert in a continuous or stepped manner as a given location on the digital map representing a real location is approached.

The present disclosure in these further aspects may include any or all of the features described in respect to the other aspects of the disclosure.

Accordingly, in embodiments of the disclosure in any of its aspects, a navigation instruction, warning or alert is enhanced in a continuous or stepped manner as a given location is approached i.e. as a current position approaches the given location. For example, the location could be a junction where a user must perform a manoeuvre, or it could be a hazardous bend or safety camera location that the user needs to be aware of. By enhancing the navigation instruction, warning or alert progressively as the distance to the location decreases, the attention of the user will be brought more readily to the instruction, warning or alert, enabling them to distinguish it more easily from other less important information which may be provided, and take any necessary action. This may reduce the possibility of user confusion or distraction. Furthermore, even if conditions e.g. background or noise are less than ideal, by improving the ease of interpretation of the key information, the problems associated with such conditions may be reduced.

By "stepped" it is meant that the instruction, warning or alert is enhanced in a plurality of discrete steps.

In embodiments of the invention, the navigation apparatus comprises a display for displaying a digital map to a user, and means for accessing digital map data and cause a digital map to be displayed to a user via the display. The location is a location represented by the digital map. The location may be a stored map location. The apparatus may comprise a memory storing the digital map data. The memory may store the location. Alternatively the data and/or location could be stored in whole, or in part, remotely from the apparatus. The location is a predetermined location.

In embodiments not encompassed by the wording of the claims but are considered as useful for understanding the invention, the navigation instruction, warning or alert relates to the given location i.e. a given location on a digital map. The instruction, warning or alert is generated with respect to the given location on the digital map, and the method may comprise a step of generating the instruction, warning or alert with respect to the given location on the digital map. The navigation apparatus may comprise means for so doing.

In some embodiments, not encompassed by the wording of the claims but are considered as useful for understanding the invention, in which a navigation instruction is provided, the location is a location at or by which an action must be taken by the user in response to the navigation instruction. In some embodiments not encompassed by the wording of the claims but are considered as useful for understanding the invention, the location is therefore a decision point along a route. For example, the location may be a junction where the user must make a turn as instructed. In some embodiments not encompassed by the wording of the claims but are considered as useful for understanding the invention, in which a navigation instruction is provided, the location is a junction, intersection, interchange or roundabout. The location may be any location where a manoeuvre is to be performed by the user. A manoeuvre could be a lane change.

In embodiments, a warning is provided, the location is a location to which the warning applies. Thus the user must note the warning by the location. For example, the location is a safety camera location. In embodiments the warning is a warning regarding the presence of a safety camera or a speed limit change at the given location.

Some exemplary locations, of embodiments not encompassed by the wording of the claims but are considered as useful for understanding the invention, will now be described. The location may be a point location or an extended region. The location could be a junction, roundabout, interchange or intersection or other decision point. The location could be a location where a lane change is required. These possibilities would be particularly applicable to cases in which a navigation instruction is provided, but a warning or alert could also apply to such locations e.g. if they were potentially dangerous, if safety cameras were located there etc. The location could be a safety camera location, accident black spot, or a hazardous location e.g. a dangerous bend, sudden descent etc Such possibilities are particularly applicable to cases in which a warning or alert is provided. In yet other possibilities, the location could be a location of a POI, and/or a user specified location whose presence the user is to be alerted to. For example, a user may specify that they wish to be alerted to the presence of a particular type of POI, such as a petrol station when they come within a range of the POI. The location could be a location where a change in speed limit occurs. In any event, the location is a location on a digital map i.e. a location representing a corresponding real world location.

In embodiments not encompassed by the wording of the claims but considered as useful for understanding the invention, the navigation instruction, warning or alert may be an audible or a visual instruction, warning or alert, or a combination of both an audible and visual instruction, warning or alert i.e. an audible and a visual instruction or an audible and a visual alert or an audible and a visual warning. It will be appreciated that both audible and visual instructions may be given e.g. providing the same command. If both audible and visual warnings, instructions or alerts are provided, these may be provided simultaneously or sequentially. If both are provided, either or both may be enhanced in accordance with the invention. Preferably at least a visual navigation instruction, warning or alert is enhanced.

In embodiments not encompassed by the wording of the claims but considered as useful for understanding the invention, an audible instruction, warning or alert may be in the form of an audible signal and/or a spoken instruction, warning or alert. An audible signal herein refers to a non verbal audible signal. In embodiments, not encompassed by the wording of the claims but considered as useful for understanding the invention, in which an audible signal is provided, it is provided in combination with a visual instruction, warning or alert.

In embodiments a visual warning is provided, it is displayed to the user using the display of the navigation apparatus. The navigation apparatus comprises means for causing the visual warning to be displayed to a user via a display of the apparatus. Any additional information may be similarly displayed.

In embodiments of the invention not encompassed by the wording of the claims but are considered as useful for understanding the invention in which a navigation instruction is provided, the navigation instruction is an instruction for guiding a user along a route. The instruction may be an instruction regarding an action to be taken by the user in order to follow a route. The route may be a route calculated by the navigation apparatus. The instruction may be an instruction regarding a manoeuvre to be performed by the user. For example, the instruction may be an instruction to take a given turning, to take a given exit from a roundabout, to take a given exit from a road, to change lane etc, The method may further comprise the apparatus calculating a route from a first location to a second location, and the apparatus may comprise means for so doing. The location is then preferably a decision point along the route.

In embodiments not encompassed by the wording of the claims but are considered as useful for understanding the invention in which a navigation instruction is provided, the navigation instruction preferably comprises at least an indication of a manoeuvre to be performed by the user. This may be a road or lane level manoeuvre. In embodiments in which the navigation instruction is a visual instruction, the indication may be a graphical indication and/or a text based indication. A text based indication may comprise any type of characters, including symbols, letters and/or numbers. The indication may be in any language.
Preferably at least a graphical indication is provided. The graphical indication may comprise a graphical representation such as a graphical symbol. A graphical indication may comprise an arrow, schematic diagram e.g. of a manoeuvre, safety camera or speed limit symbol.

In embodiments a warning is provided, the warning preferably comprises at least an indication identifying the nature of the warning. For example, this might be an indication of a safety camera. In embodiments a visual warning is provided, the indication may be a graphical indication and/or a text based indication. Thus it may be alphanumeric. Preferably at least a graphical indication is provided.

In embodiments a visual warning regarding the presence of a safety camera is provided, the warning further comprises displaying information regarding a current speed of travel and optionally the maximum permitted speed of travel at the safety camera. This may enable a user to adjust their speed in good time before the safety camera is reached. By enhancing a warning containing such information, the action required by a user to modify their speed to reach the speed limit, or to ensure that they remain within the speed limit will be emphasized to the user. In embodiments the warning may alternatively or additionally comprise an indication of the current speed relative to the speed limit.

The method may comprise providing additional information relating to the warning. The information may comprise a distance to the given location. However, it will be appreciated that such information is less important in embodiments of the invention than in prior art arrangements, as the user will be provided with an indication as to the proximity of the location to which the warning refers by virtue of the change in the warning itself, avoiding the need to rely upon or interpret explicit distance information. Any additional information may or may not be enhanced with the warning.

In embodiments the warning is visual and it may be provided in a warning panel of the display. Any additional information relating to the warning may also be provided in the panel.

The enhancement is a visual enhancement. A visual enhancement changes the appearance of a visual or warning to increase its visibility to a user. In embodiments not encompassed by the wording of the claims but are considered as useful for understanding the invention, the enhancement is an audible enhancement. The audible enhancement will change the audibility of an audible instruction to increase its audibility to a user. The enhancement is applied to at least a part of the warning.

The warning may comprise one or more elements which convey the warning. The enhancement is applied to at least a part of the warning. Thus any or all of the elements of the warning may be enhanced. For example, a warning may comprise multiple elements, one or more of which elements are enhanced. In embodiments the warning is a visual warning, preferably at least one element thereof selected from a graphical or text based indication is/are enhanced. For example the graphical indication could be a graphical symbol e.g. a safety camera or speed limit symbol. As discussed above, a text based indication may comprise any type of characters, including symbols, letters and/or numbers. Thus it may be alphanumeric. The indication may be in any language. For example, a text based indication might be an indication of a current speed of travel.

In some embodiments a warning regarding the presence of a safety camera is provided, preferably at least one of a displayed current speed and speed limit are enhanced e.g. increased in size as the location is approached.

An increase in the visibility of the warning can be achieved by directly or indirectly changing the appearance of the warning. For example, the surroundings e.g. a background such as a panel containing the warning could be changed to increase the contrast of the warning. Preferably the enhancement comprises directly enhancing the warning. A background e.g. a background panel may additionally be enhanced.

It will be appreciated that the warning is enhanced in a stepped or continual manner with decreasing distance to the given location i.e. decreasing distance as represented by the digital map. Thus, for example, in an embodiment not encompassed by the wording of the claims but considered as useful for understanding the invention, if the enhancement involves increasing the size of an instruction, there will not simply be a single step in the size of the instruction, but rather there will be multiple discrete steps in the size increase, or the size may increase continually as the location is approached.

In embodiments, the step of enhancing the warning in a continual or stepped manner comprises enhancing the warning by applying at least one type of enhancement in a stepped or continual manner to the warning. Thus the enhancement that is applied in the stepped or continuous manner is a given type of enhancement, such as a size increase, transparency increase etc. If multiple types of enhancement are applied, each type of enhancement that is applied is preferably a stepped or continual enhancement.
Thus each single type of enhancement is a stepped or continual enhancement.

It will be appreciated that in accordance with the invention, the warning is generated with respect to a location provided on a digital map i.e. a location represented by digital map data. The location on the digital map is indicative of the position of a real location i.e. in the real world. The method comprises enhancing the warning as a current position indicated by a position e.g. GPS signal approaches the given location provided on the digital map.

The enhancement occurs as a current position approaches the given location i.e. with decreasing distance of a current position with respect to the given location. The degree of enhancement is determined by the distance of the given location from a current position. The current position will correspond to the position of a user. The current position is indicated by a position e.g. GPS signal. In embodiments in which the navigation apparatus is located in a vehicle, the current position will be the location of the vehicle. The navigation apparatus therefore comprises means for determining a current position of the apparatus. This may be GPS positioning means or any other type of positioning means.

In embodiments, the method comprises determining or monitoring a current position of the apparatus, determining or monitoring a remaining distance between the current position and the given location, and enhancing the warning in the continuous or stepped manner as the remaining distance decreases. As mentioned above, in embodiments of the invention, the current position is a position indicated by a position signal e.g. GPS signal, and the given location is a location on a digital map representing a real location. The navigation apparatus comprises positioning means for determining or monitoring a current position of the apparatus, means for determining or monitoring a remaining distance between the current position and the given location, and means for enhancing the warning in the continuous or stepped manner as the remaining distance decreases. The method comprises enhancing the warning when one or more predetermined remaining distances are reached.

In embodiments, the method comprises determining that the remaining distance between the current position and the given location has decreased to a predetermined distance, and triggering an enhancement of the warning in response to said determining. The triggered enhancement may be a continual enhancement resulting in a gradual increase in the enhancement as the location is approached. In the case of a stepped enhancement, the predetermined distance may be a first predetermined distance, and the method may comprise determining that the remaining distance between the current position and the given location has further decreased to at least a second predetermined distance, and triggering at least one further enhancement of the warning in response to said determining. The apparatus may comprise means for carrying out any of the steps described.

In the embodiments of the invention, the method may comprise triggering the enhancement of the warning as a current e.g. GPS position approaches a given location on a digital map representing the position of a location in the real world.

The enhancement may be selected from a wide range of possible types of enhancement. An enhancement may comprise any of the following enhancements, and any combination of one or more of such enhancements.

Some examples of enhancements to visual instructions will first be described.

In some embodiments the step of enhancing may comprise increasing a size of at least a part of the visual warning. The size may thus be increased in a stepped or continual manner as the location is approached.

Alternatively or additionally the step of enhancing may comprise changing a transparency of at least a part of a visual warning, preferably to make the warning relatively more opaque. The transparency is with respect to a background of the warning. The background could be a warning panel, or an underlying image e.g. of a part of a displayed map. In these embodiments the warning can be caused to more fully occlude a part of the displayed image, such as a part of a displayed map view, to bring the warning to the user's attention as the location is approached.

Alternatively or additionally the step of enhancing may comprise increasing a contrast between the warning and a background to the warning.

Alternatively or additionally the step of enhancing may comprise changing the colour of at least a part of the visual warning. For example, this could comprise changing a colour of an element e.g. arrow as a whole, or an initially white arrow may be progressively filled with one or more different colours as the location is approached.

Alternatively or additionally the step of enhancing may comprise increasing the intensity of colour of at least a part of the warning.

Alternatively or additionally the step of enhancing may comprise changing a shape of at least a part of the warning.

Alternatively or additionally at least a part of the warning may move, and the enhancement comprises changing a frequency and/or amplitude of the movement.

Alternatively or additionally the enhancement may comprise changing a font of at least a part of an warning comprising text.

In embodiments in which the warning is provided in a panel, the panel may also be enhanced. For example a size of the panel may be increased as a size of the warning is increased, or a colour of the panel may be changed. This may occur at the same or different rate to the enhancement of the warning.

In one exemplary embodiment not encompassed by the wording of the claims but considered as useful for understanding the invention, a navigation instruction comprises a graphical indication in the form of an arrow or schematic diagram of a manoeuvre to be made, and the enhancement comprises increasing the size, decreasing the transparency or increasing a colour intensity of the indication.

In another exemplary embodiment, a warning for a safety camera includes an alphanumeric indication providing information regarding one or both of a current speed and allowed speed at the safety camera location, and the enhancement comprises increasing a size at least of the alphanumeric indication. The warning may also comprise a graphical indication comprising a symbol representing a safety camera.

Some examples of enhancements to audible instructions, alerts orwarnings of embodiments not encompassed by the wording of the claims but are considered as useful for understanding the invention will now be described.

The step of enhancing an audible instruction, alert or warning may comprise increasing a volume level of the instruction.

Alternatively or additionally the step of enhancing an audible instruction, alert or warning may comprise changing the pitch of the instruction, warning or alert e.g. increasing the pitch.

Alternatively or additionally the step of enhancing an audible instruction, warning or alert which is a spoken instruction, warning or alert may comprise changing the phrasing or intonation of the instruction, warning or alert. Thus an instruction, warning or alert may be made to sound more like a command as the location is approached.

Alternatively or additionally the step of enhancing an audible instruction, alert or warning comprising an intermittent audible signal may comprise changing e.g. increasing the frequency with which the signal is provided.

In accordance with any of the embodiments the instruction, a warning or alert is enhanced until it reaches a final state. The final state may be reached at or in close proximity to the given location.

The enhancement may be applied at a constant or varying rate. For example the rate of enhancement may increase as the location is approached.

The distance to the location at which enhancement commences, a rate of enhancement and the distance from the location at which the final state is attained may be selected as desired. The distance from the location at which the enhancement commences i.e. the distance from the given location on the digital map as indicated by the digital map, should leave scope to increase the enhancement of the instruction before the location is reached. Distances will depend upon the speed of travel of the user, and the closeness of the locations associated with warnings, alerts or instructions that are enhanced. Rates of enhancement may also depend upon such factors, and should be selected to ensure that a user has adequate time to respond, but may also be controlled by other factors, such as a user setting. For example, older users may prefer enhancements to be applied sooner and/or increase at a faster rate.

Additional steps may be taken to reinforce the instruction, warning or alert once the final state of the enhanced instruction, alert or warning is attained, or on a final approach to the location..

In embodiments, a fish eye effect is applied to the display comprising an enhanced visual warning. A fish eye effect has the effect of emphasising parts of a display representing closer areas at the expense of parts representing areas further away.

Alternatively or additionally, the method may comprise causing at least a part of the enhanced visual warning, or a panel containing the enhanced visual warning, to move across the display. For example, the warning may be caused to move within a warning panel, or could move with the panel. The at least a part of the warning may move towards a centre of the display. In other arrangements, it could bounce e.g. within a panel.

Alternatively or additionally, the method may comprise causing the enhanced visual warning, or a panel containing the enhanced visual warning, to flash or change colour.

If not previously provided, an audible instruction, warning or alert may additionally be provided.

In embodiments a warning regarding the presence of a safety camera is provided, the degree and/or rate of enhancement of the warning is related additionally to a relative difference between a current speed and the allowed speed at the safety camera. For example, if the user is getting close to the safety camera and exceeds the speed limit, the enhancement may be greater or may escalate sooner than if the user is not exceeding the speed limit. The extent to which additional steps are taken to emphasise the warning may also depend upon the speed of travel relative to the allowed speed and distance from the safety camera location.

It will be appreciated that the present invention provides the ability for the user to more easily judge when they need to respond to a warning. The user may be less likely to, for example, prematurely make a manoeuvre in response to a navigation instruction.

In embodiments not encompassed by the wording of the claims but are considered as useful for understanding the invention, in which a navigation instruction is provided, a rate of enhancement may be related to the map features along a route being followed to the location. This may be done in a manner to reduce confusion regarding the interpretation of the instruction. For example, an enhancement may be applied in a manner to reduce the likelihood of confusion where there is a possibility that the user could attempt to follow the instruction too soon. For example, the user might think that an instruction to turn right applied to a turning just before the intended turning. Preferably a final state of enhancement is reached only when the user has reached a location such that the correct interpretation is the only interpretation of the instruction i.e. when their position e.g. GPS position has reached a location on the digital map such that this is the case.

The rate of enhancement may refer to the rate of a continual enhancement or the points at which a stepped enhancement is incremented. A rate of enhancement may be regular or irregular.

In embodiments of the invention, the enhancement of a warning is carried out automatically as the given location is approached. The onset of the enhancement is triggered when a current location comes within a predetermined distance of the given location, and the apparatus comprises means for performing this step.

In addition to enhancing at least a part of the warning, further steps may be taken to enhance intelligibility of the warning, or at least a significant part thereof. For example the visibility of other displayed information, which may or may not relate to the warning, may be decreased. This may involve reducing the size of other displayed information or ceasing display of the information. Such measures may be taken at least until the location has been passed e.g. until the warning is no longer applicable. In other arrangements, the other information may be left unchanged as the enhancement is applied. This may still result in the key information being emphasised.

Once the given location has been passed, i.e. on the digital map, the warning is preferably removed. If it is still visible, preferably the enhancement of the warning is removed or decreased.

It has been found that visual enhancement of a displayed warning may additionally increase visibility in conditions of glare or reflection, improving ease of interpretation by a user.

In embodiments of the invention, the navigation apparatus is a mobile navigation apparatus. In embodiments the navigation apparatus is located in a vehicle. The current location of the navigation apparatus will correspond to the current location of the user/driver, (and vehicle).

The principles of the present invention are applicable to any form of navigation apparatus. In accordance with any of the aspects or embodiments of the invention the apparatus may comprise a display for displaying a digital map to a user, a processor configured to access digital map data and cause a digital map to be displayed to a user via the display, and a user interface operable by a user to enable the user to interact with the apparatus. References to a processor may refer to a set of one or more processors.

It will be appreciated that the navigation apparatus may comprise a set of one or more processors for carrying out any of the steps described. For example, the "means for" carrying out any of the steps may be a set of one or more processors.

One particular area of utility is in relation to portable navigation devices (PND). In embodiments, therefore, the navigation apparatus is an apparatus of a portable navigation device (PND). In accordance with a further aspect, the navigation apparatus referred to in the aspects and embodiments of the invention above is a portable navigation device (PND).

The invention is also applicable to navigation apparatus which is provided as part of an integrated navigation system. For example the apparatus may form part of an in-vehicle integrated navigation system.

Regardless of its implementation, a navigation apparatus used in accordance with the present invention may comprise a processor, memory, and digital map data stored within said memory. The processor and memory cooperate to provide an execution environment in which a software operating system may be established. One or more additional software programs may be provided to enable the functionality of the apparatus to be controlled, and to provide various other functions. A navigation apparatus of the invention may preferably include GPS (Global Positioning System) signal reception and processing functionality. The apparatus may comprise one or more output interfaces by means of which information may be relayed to the user. The output interface(s) may include a speaker for audible output in addition to the visual display. The apparatus may comprise input interfaces including one or more physical buttons to control on/off operation or other features of the apparatus.

In other embodiments, the navigation apparatus may be implemented by means of an application of a processing device which does not form part of a specific navigation device. For example the invention may be implemented using a suitable computer system arranged to execute navigation software. The system may be a mobile or portable computer system e.g. a mobile telephone or laptop, or may be a desktop system.

The present invention extends to a computer program product comprising computer readable instructions executable to perform a method according to any of the aspects or embodiments of the invention, or to cause a navigation apparatus to perform such methods.

The present invention extends to a computer program product comprising computer readable instructions executable when run on a navigation apparatus in accordance with any of the embodiments of the invention to cause a set of one or processors of the navigation apparatus to perform the steps of providing warning to a user, and enhancing the warning in a continuous or stepped manner as a given location is approached, or any of the other embodiments of the method of the other aspects of the invention.

It will be appreciated that any of the further aspects of the invention may include any or all of the features of the invention described in relation to any other aspects and embodiments of the invention to the extent they are not mutually inconsistent therewith.

Advantages of these embodiments are set out hereafter, and further details and features of each of these embodiments are defined in the accompanying dependent claims and elsewhere in the following detailed description.

### Brief Description of the Drawings

Various aspects of the teachings of the present invention, and arrangements embodying those teachings, will hereafter be described by way of illustrative example with reference to the accompanying drawings, in which:
Fig. 1 is a schematic illustration of a Global Positioning System (GPS);
Fig. 2 is a schematic illustration of electronic components arranged to provide a navigation device;
Fig. 3 is a schematic illustration of the manner in which a navigation device may receive information over a wireless communication channel;
Figs. 4A and 4B are illustrative perspective views of a navigation device.
Fig. 5 is a view illustrating a part of the display of a navigation device providing a navigation instruction in accordance with the prior art;
Figs 6A, 6B and 6C show the display of a PND in accordance with a first embodiment, not encompassed by the wording of the claims but are considered as useful for understanding the invention, in which the PND provides a navigation instruction, the Figures respectively showing the display at decreasing distances from a junction to which the instruction relates;
Figs. 7A, 7B, 7C, 7D show the display of PND in accordance with a second embodiment, not encompassed by the wording of the claims but are considered as useful for understanding the invention, in which the PND provides a navigation instruction, the Figures respectively showing the display at decreasing distances from a junction to which the instruction relates;
Figs. 8A and 8B illustrate the display of a PND in accordance with an embodiment of the invention in which the PND provides a warning regarding a safety camera, the Figures illustrating the display respectively at decreasing distances from the safety camera;
Fig. 9A and 9B illustrate a further embodiment, not encompassed by the wording of the claims but are considered as useful for understanding the invention, in which map features are taken into account when enhancing a navigation instruction.

### Detailed Description of Preferred Embodiments

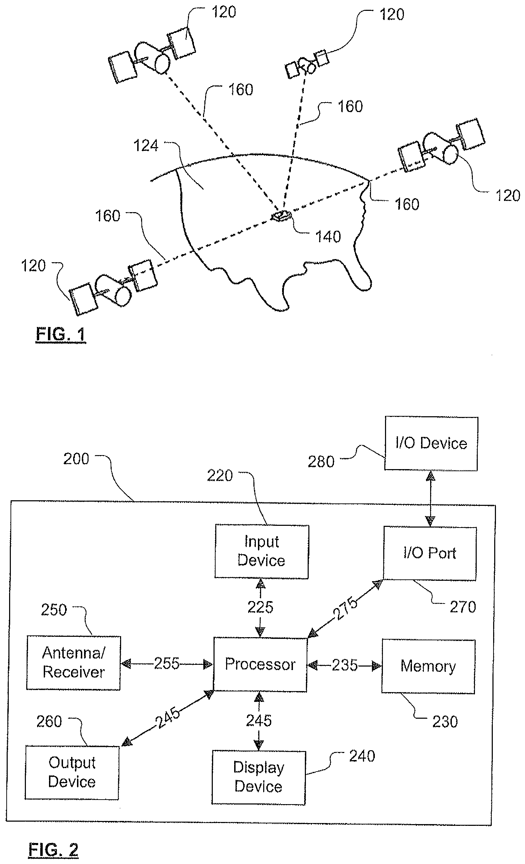

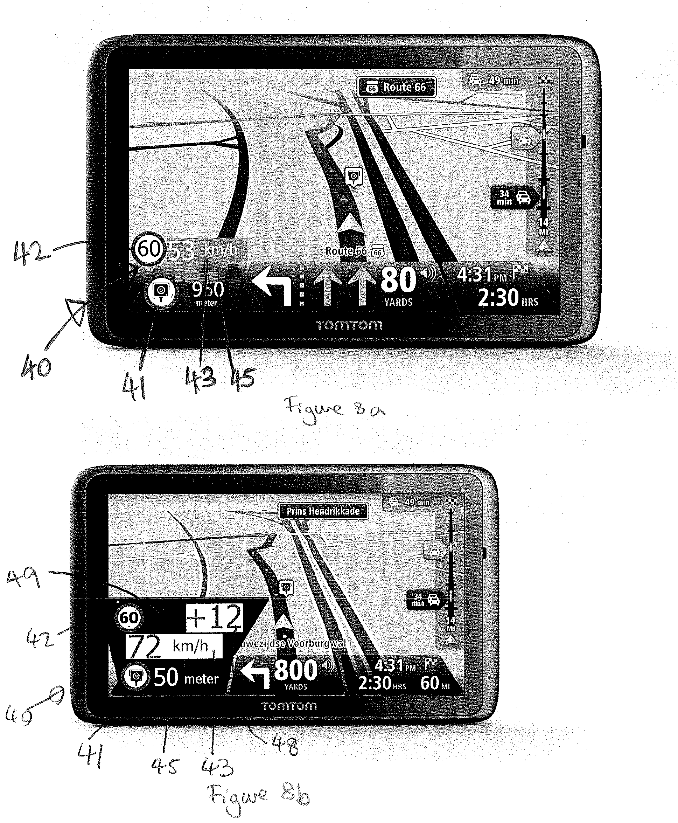

Some preferred embodiments of the invention will now be described by way of example only, and with reference to Figures 1-8. The description with respect to Figures 1-4B provides background information to facilitate understanding of the invention in its various embodiments. The embodiments of the invention are described by reference to Figure 8.

Preferred embodiments of the present invention will now be described with particular reference to a PND. It should be remembered, however, that the teachings of the present invention are not limited to PNDs but are instead universally applicable to any type of processing device that is configured to execute navigation software so as to provide route planning and navigation functionality. It follows therefore that in the context of the present application, a navigation device is intended to include (without limitation) any type of route planning and navigation device, irrespective of whether that device is embodied as a PND, a navigation device built into a vehicle, or indeed a computing resource (such as a desktop or portable personal computer (PC), mobile telephone or portable digital assistant (PDA)) executing route planning and navigation software.

It will also be apparent from the following that the teachings of the present invention even have utility in circumstances where a user is not seeking instructions on how to navigate from one point to another, but merely wishes to be provided with a view of a given location. In such circumstances the "destination" location selected by the user need not have a corresponding start location from which the user wishes to start navigating, and as a consequence references herein to the "destination" location or indeed to a "destination" view should not be interpreted to mean that the generation of a route is essential, that travelling to the "destination" must occur, or indeed that the presence of a destination requires the designation of a corresponding start location.

With the above provisos in mind, Fig. 1 illustrates an example view of Global Positioning System (GPS), usable by navigation devices. Such systems are known and are used for a variety of purposes. In general, GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 1, the GPS system is denoted generally by reference numeral 100. A plurality of satellites 120 are in orbit about the earth 124. The orbit of each satellite 120 is not necessarily synchronous with the orbits of other satellites 120 and, in fact, is likely asynchronous. A GPS receiver 140 is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner.

Figure 2 is an illustrative representation of electronic components of a navigation device 200 according to a preferred embodiment of the present invention, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilised to input information; and the display screen 240 can include any type of display screen such as an LCD display, for example. In a particularly preferred arrangement the input device 220 and display screen 240 are integrated into an integrated input and display device, including a touchpad or touchscreen input so that a user need only touch a portion of the display screen 240 to select one of a plurality of display choices or to activate one of a plurality of virtual buttons.

The navigation device may include an output device 260, for example an audible output device (e.g. a loudspeaker). As output device 260 can produce audible information for a user of the navigation device 200, it is should equally be understood that input device 240 can include a microphone and software for receiving input voice commands as well.

In the navigation device 200, processor 210 is operatively connected to and set to receive input information from input device 220 via a connection 225, and operatively connected to at least one of display screen 240 and output device 260, via output connections 245, to output information thereto. Further, the processor 210 is operably coupled to a memory resource 230 via connection 235 and is further adapted to receive/send information from/to input/output (1/0) ports 270 via connection 275, wherein the 1/0 port 270 is connectible to an 1/0 device 280 external to the navigation device 200. The memory resource 230 comprises, for example, a volatile memory, such as a Random Access Memory (RAM) and a non-volatile memory, for example a digital memory, such as a flash memory. The external 1/0 device 280 may include, but is not limited to an external listening device such as an earpiece for example. The connection to 1/0 device 280 can further be a wired or wireless connection to any other external device such as a car stereo unit for hands- free operation and/or for voice activated operation for example, for connection to an ear piece or head phones, and/or for connection to a mobile phone for example, wherein the mobile phone connection may be used to establish a data connection between the navigation device 200 and the internet or any other network for example, and/or to establish a connection to a server via the internet or some other network for example.

Fig. 2 further illustrates an operative connection between the processor 210 and an antenna/receiver 250 via connection 255, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Fig. 2 are powered by power sources (not shown) in a conventional manner. As will be understood by one of ordinary skill in the art, different configurations of the components shown in Fig. 2 are considered to be within the scope of the present application. For example, the components shown in Fig. 2 may be in communication with one another via wired and/or wireless connections and the like. Thus, the scope of the navigation device 200 of the present application includes a portable or handheld navigation device 200.

In addition, the portable or handheld navigation device 200 of Fig. 2 can be connected or "docked" in a known manner to a vehicle such as a bicycle, a motorbike, a car or a boat for example. Such a navigation device 200 is then removable from the docked location for portable or handheld navigation use.

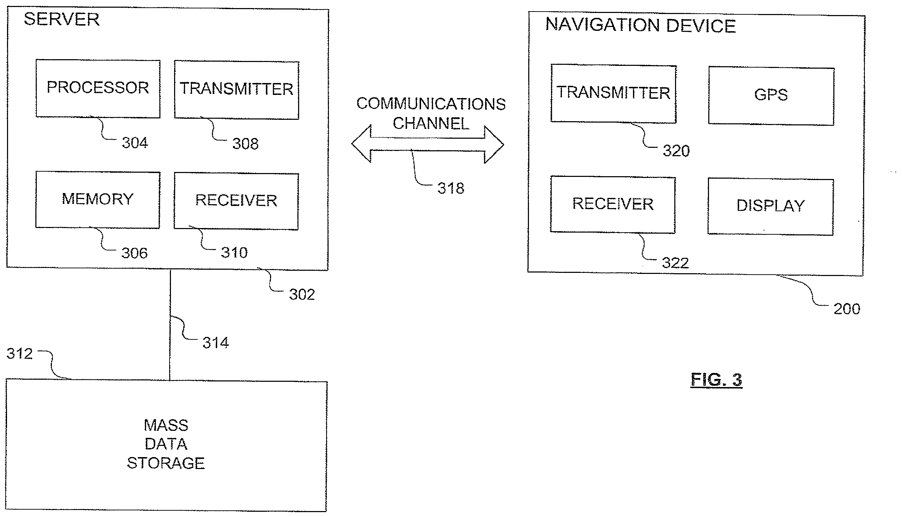

Referring now to Fig. 3, the navigation device 200 may establish a "mobile" or telecommunications network connection with a server 302 via a mobile device (not shown) (such as a mobile phone, PDA, and/or any device with mobile phone technology) establishing a digital connection (such as a digital connection via known Bluetooth technology for example). Thereafter, through its network service provider, the mobile device can establish a network connection (through the internet for example) with a server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the server 302, using an internet (such as the World Wide Web) for example, can be done in a known manner. This can include use of TCP/IP layered protocol for example. The mobile device can utilize any number of communication standards such as CDMA, GSM, WAN, etc.

As such, an internet connection may be utilised which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet).

The navigation device 200 can further complete a data connection with the mobile device, and eventually with the internet and server 302, via existing Bluetooth technology for example, in a known manner, wherein the data protocol can utilize any number of standards, such as the GPRS, the Data Protocol Standard for the GSM standard, for example.

The navigation device 200 may include its own mobile phone technology within the navigation device 200 itself (including an antenna for example, or optionally using the internal antenna of the navigation device 200). The mobile phone technology within the navigation device 200 can include internal components as specified above, and/or can include an insertable card (e.g. Subscriber Identity Module or SIM card), complete with necessary mobile phone technology and/or an antenna for example. As such, mobile phone technology within the navigation device 200 can similarly establish a network connection between the navigation device 200 and the server 302, via the internet for example, in a manner similar to that of any mobile device.

For GPRS phone settings, a Bluetooth enabled navigation device may be used to correctly work with the ever changing spectrum of mobile phone models, manufacturers, etc., model/manufacturer specific settings may be stored on the navigation device 200 for example. The data stored for this information can be updated.

In Fig. 3 the navigation device 200 is depicted as being in communication with the server 302 via a generic communications channel 318 that can be implemented by any of a number of different arrangements. The server 302 and a navigation device 200 can communicate when a connection via communications channel 318 is established between the server 302 and the navigation device 200 (noting that such a connection can be a data connection via mobile device, a direct connection via personal computer via the internet, etc.).

The server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver.

Server 302 is further connected to (or includes) a mass storage device 312, noting that the mass storage device 312 may be coupled to the server 302 via communication link 314. The mass storage device 312 contains a store of navigation data and map information, and can again be a separate device from the server 302 or can be incorporated into the server 302.

The navigation device 200 is adapted to communicate with the server 302 through communications channel 318, and includes processor, memory, etc. as previously described with regard to Fig. 2, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver.

Software stored in server memory 306 provides instructions for the processor 304 and allows the server 302 to provide services to the navigation device 200. One service provided by the server 302 involves processing requests from the navigation device 200 and transmitting navigation data from the mass data storage 312 to the navigation device 200. Another service provided by the server 302 includes processing the navigation data using various algorithms for a desired application and sending the results of these calculations to the navigation device 200.

The communication channel 318 generically represents the propagating medium or path that connects the navigation device 200 and the server 302. Both the server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fibre optic cables, converters, radio-frequency (RF) waves, the atmosphere, empty space, etc. Furthermore, the communication channel 318 can include intermediate devices such as routers, repeaters, buffers, transmitters, and receivers, for example.

In one illustrative arrangement, the communication channel 318 includes telephone and computer networks. Furthermore, the communication channel 318 may be capable of accommodating wireless communication such as radio frequency, microwave frequency, infrared communication, etc. Additionally, the communication channel 318 can accommodate satellite communication.

The communication signals transmitted through the communication channel 318 include, but are not limited to, signals as may be required or desired for given communication technology. For example, the signals may be adapted to be used in cellular communication technology such as Time Division Multiple Access (TOMA), Frequency Division Multiple Access (FDMA), Code Division Multiple Access (CDMA), Global System for Mobile Communications (GSM), etc. Both digital and analogue signals can be transmitted through the communication channel 318. These signals may be modulated, encrypted and/or compressed signals as may be desirable for the communication technology.

The server 302 includes a remote server accessible by the navigation device 200 via a wireless channel. The server 302 may include a network server located on a local area network (LAN), wide area network (WAN), virtual private network (VPN), etc.

The server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device may establish a wireless connection to the internet, for connecting the navigation device 200 to the server 302 via the internet.

The navigation device 200 may be provided with information from the server 302 via information downloads which may be periodically updated automatically or upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a server 302.

As indicated above in Fig. 2, a navigation device 200 includes a processor 210, an input device 220, and a display screen 240. The input device 220 and display screen 240 are integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 241, such as audio input/output devices for example.

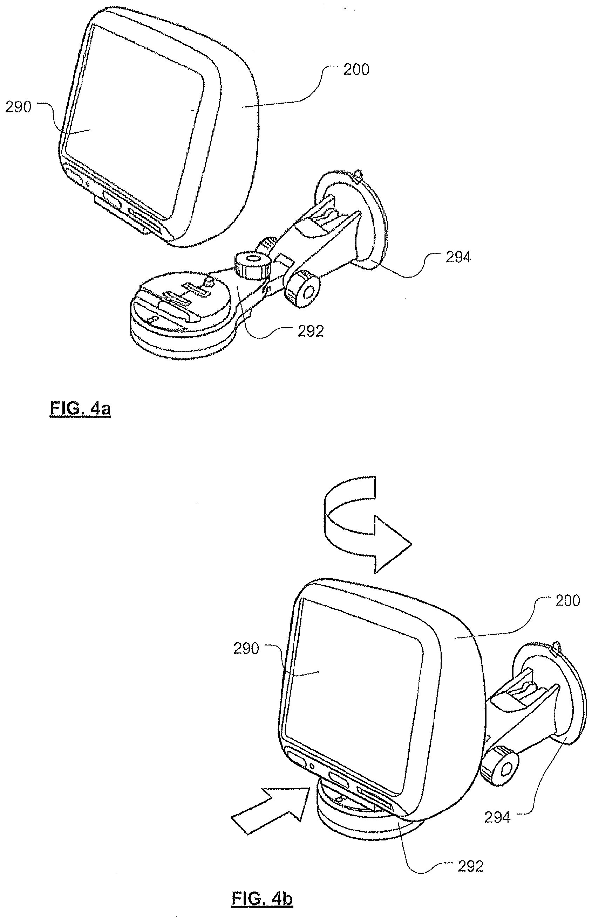

Figs 4A and 4B are perspective views of a navigation device 200. As shown in Fig. 4A, the navigation device 200 may be a unit that includes an integrated input and display device 290 (a touch panel screen for example) and the other components of fig. 2 (including but not limited to internal GPS receiver 250, microprocessor 210, a power supply, memory systems 230, etc.).

The navigation device 200 may sit on an arm 292, which itself may be secured to a vehicle dashboard/window/etc. using a suction cup 294. This arm 292 is one example of a docking station to which the navigation device 200 can be docked.

As shown in Fig. 4B, the navigation device 200 can be docked or otherwise connected to an arm 292 of the docking station by snap connecting the navigation device 292 to the arm 292 for example. The navigation device 200 may then be rotatable on the arm 292, as shown by the arrow of Fig. 4B. To release the connection between the navigation device 200 and the docking station, a button on the navigation device 200 may be pressed, for example. Other equally suitable arrangements for coupling and decoupling the navigation device to a docking station are well known to persons of ordinary skill in the art.

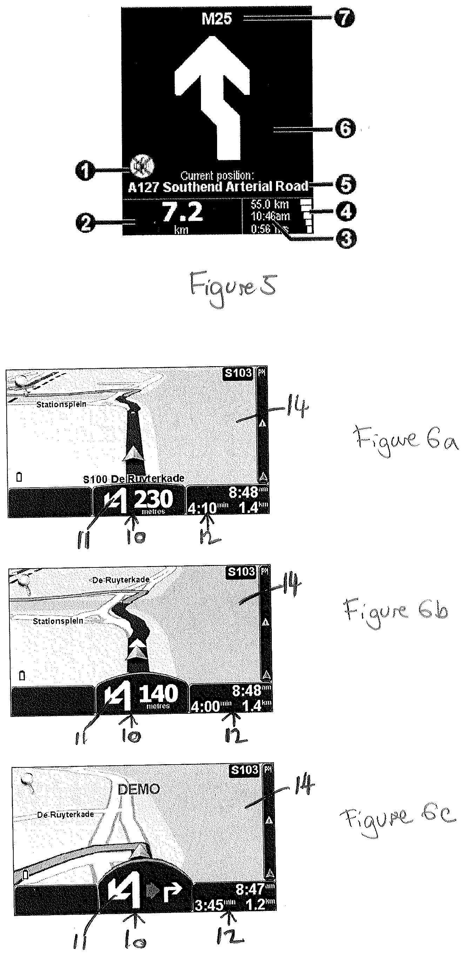

Figures 1-4B facilitate understanding of the invention, and provide background understanding thereof. Embodiments of the invention, certain of which (as will be indicated) are not encompassed by the wording of the claims but are considered as useful for understanding the invention, will now be described by reference to Figure 5 onwards.

A user may be confronted with a large amount of information at any given time by a PND. For example a PND may provide information regarding the current state of operation of the device, information about the weather, information about the settings of the PND, information about a current trip, such as an expected time of arrival, and distance to destination, as well as information regarding the surroundings often conveyed via the displayed digital map. Amongst all this information it can be difficult for a user to discern which pieces of information are of high importance, require an action by them, or which it is critical to note. Examples of such important information would be navigation instruction, alerts or warnings, such as a route instruction regarding a manoeuvre which must be performed to follow a calculated route, or a warning about a safety camera or upcoming hazard, such as a dangerous bend. In other arrangements it is possible that a user may have set up an alert, such as an alert for the presence of a particular type of POI. For example a user may wish to know when they are close to a petrol station.

Another problem is that it may be difficult for the user to easily interpret navigation instructions, alerts or warnings are provided. For example, if a driver is on a road with several side streets next to each other, and receives a navigation instruction to turn into one of these side streets, the driver may be unsure as to which side street this refers. An indication regarding the distance to the turning, such as "turn right in 100 m" may not be helpful, as many users find it difficult to relate distances to their actual view. In other situations a user may have difficulty in interpreting a navigation instruction that is given for other reasons. For example, the user may find the instruction counter-intuitive, because they are driving on a road that curves sharply to the left while the navigation instruction states that they must turn right in 50 m. In some situations, conditions may not be ideal for the user to assimilate information given by the PND, such as navigation instructions, warnings or alerts. For example, if an audible instruction may be impeded by the presence of background noise, or glare and reflection may interfere with visibility of a visual instruction. These problems may be particularly acute for older drivers.

The present invention may provide improved methods for providing navigation warnings to a user of a PND which may help to address such problems.

The above problems are illustrated with respect to Figure 5, which is part of the display of a PND in accordance with the prior art. The display includes a navigation instruction in the form of an arrow (6) indicating schematically the next manoeuvre that must be made by the driver to follow a calculated route. It will be seen that considerable amounts of other information are also provided. In this example, there is an icon 1 showing that sound effects are currently off. Information panel 2 includes a distance until the next navigation instruction. The display also includes information panel 3 which includes information about the journey i.e. distance, expected time of arrival, journey duration etc., a GPS signal strength indicator 4, an indication of the name of the road that the driver is currently on 5, and an indication of the name of the next road 7. From this display it is difficult for the user to readily identify the critical information, being the navigation instruction provided by the arrow 6. The illustrated part of the display would form part of a display including other information, as well as a map view, exacerbating the problem.

An embodiment, not encompassed by the wording of the claims but considered as useful for understanding the invention, will now be described by reference to Figures 6A, 6B and 6C, which show the display of a PND on the approach to a junction.
Figures 6A, 6B and 6C, not encompassed by the wording of the claims but considered as useful for understanding the invention, show the display at a distance of 230 m, 140m and in close proximity to the junction respectively.

As shown in Figure 6A, in this example, the PND is providing a navigation instruction to the user which informs them that they must perform a sharp left turn. The instruction is provided by a graphical indication in the form of an arrow 11. Also displayed in a navigation instruction information panel 10 is the current distance until the junction where this manoeuvre must be performed, currently being 230m. Various other information is also present in the display, for example information about the trip in panel 12 on the right-hand side of the navigation instruction panel 10. Above the navigation instruction panel 10 and the route information panel 12, the map 14 representing the road ahead is displayed.

Figure 6B shows the display as the driver moves closer to the junction where the left turn must be taken. Figure 6B illustrates the case in which the user is only 140 m from the location at which the left-hand turn must be taken. Here it may be seen that the navigation instruction arrow 11 has increased in size. The navigation instruction panel 10 has also grown.

Finally, Figure 6C illustrates the appearance of the display when the user has almost reached the junction. Here the navigation instruction arrow 11 and the navigation instruction panel 10 have become even larger. The distance to the location where the manoeuvre must be performed is no longer displayed, as the user's attention is more readily engaged by the increased size of the box than a distance indication. In the place of the distance indication, an indication of the next manoeuvre to be taken is instead provided.

It will be appreciated that the enhancement to the navigation instruction, namely its increase in size in the embodiments of Figures 6A to 6C is provided in a continual fashion as the junction is approached. The arrow and its instruction panel gradually grow in size. Alternatively the arrow and panel could grow in a series of discrete steps. In this embodiment, the instruction panel may starts to overlap or take over the actual view shown by the PND more readily drawing the user's attention to the instruction therein. The enhancement of the navigation instruction occurs as the current GPS position of the PND approaches the junction on the digital map which represents the position of the junction in the real world.

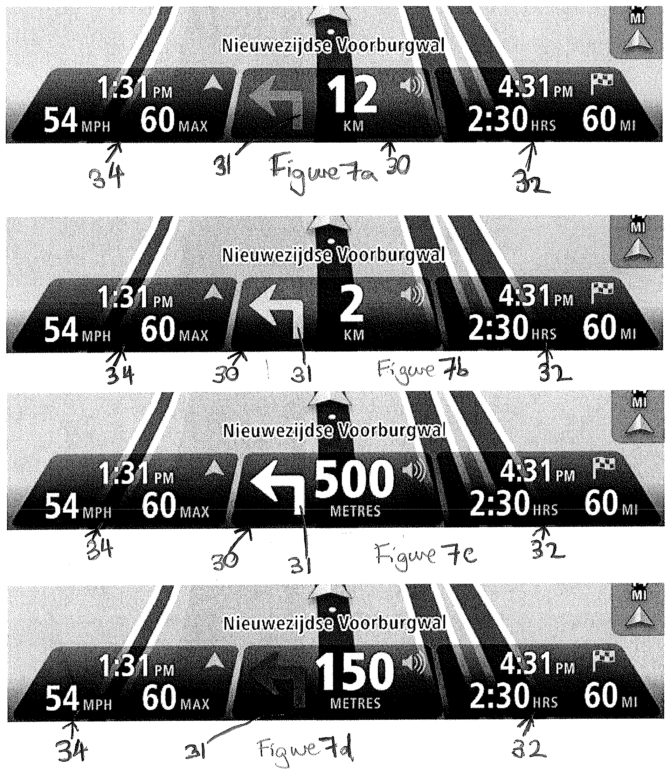

Figures 7A, B, C and D, not encompassed by the wording of the claims but considered as useful for understanding the invention, illustrate another way in which the display of a navigation instruction may be enhanced on an approach to a location where a manoeuvre must be performed in accordance with a further embodiment not encompassed by the wording of the claims but considered as useful for understanding the invention. Figures 7A-D show respectively the display of the PND at a distance of 12km, 2km, 500m and 150 m from a junction where a left turn is to be performed. These Figures shows the bottom part of the display of the PND.

Referring to Figure 7A, the navigation instruction is provided in a central navigation instruction panel 30, and is in the form of an arrow 31 detailing the manoeuvre to be performed. An indication of the remaining distance to the junction where the instruction must be implemented is also provided in the instruction panel 30. The display also includes a panel 32 including information about the journey, and a panel 34 providing information about current conditions, including a current speed, the speed limit for the road section being travelled, and a current time.

As the driver gets closer to the junction where the user must perform the left turn, the transparency of the arrow 31 providing the navigation instruction starts to change. It will be seen that by the time the driver is 2km from the junction in Figure 7B, the arrow has become less transparent or more opaque By the time the driver is only 500m from the junction as shown in Figure 7C the arrow 31 has become considerably more opaque such that it presents a greater contrast with the background.

In Figure 7D, the current position is only 150 m from the junction. Here the now opaque arrow 31 has changed colour. Although not clear in Figure 7D, it has adopted a red colour which causes it to stand out even more clearly from its background, reinforcing the instruction. Thus the enhanced arrow undergoes a further change to further reinforce the instruction.

It will be seen that the distance to junction indication in navigation instruction panel 10 does not change as the junction is approached. This emphasises the navigation instruction which, in contrast, does change. As the navigation instruction is enhanced as the junction is approached, the driver is provided implicitly with an indication of the distance remaining to the junction, in a manner more easily interpreted than a distance figure. The distance figures could be omitted as they are of secondary significance to the driver in assessing distance remaining to the junction in view of the enhancement in accordance with the invention.

In this embodiment (which is not encompassed by the wording of the claims but considered as useful for understanding the invention), rather than changing in size as in the embodiment of Figures 6A to 6C (which is also not encompassed by the wording of the claims but considered as useful for understanding the invention), the navigation instruction arrow therefore changes transparency relative to a background to result in it becoming more readily visible to the driver. The change in its appearance will draw the user's attention to the instruction in preference to the other information also being conveyed in the display which do not change. Again the enhancement is triggered as the current GPS position of the PND approaches the position of the junction on a digital map.

While Figures 6A-C and 7A-D illustrate embodiments, not encompassed by the wording of the claims but are considered as useful for understanding the invention, in which the navigation instruction is an instruction to perform a manoeuvre at or by a given location, being a junction, with the instruction being enhanced as the junction is approached, the location need not be a junction. It could be any decision point along a navigated route, e.g. a roundabout, intersection, interchange etc, or a point where a lane change is required to follow the route.

The enhancement of a navigation instruction need not be a change in size or transparency as exemplified above. Another example would be for the intensity of colour, or the colour of the navigation instruction to change. The whole instruction could progressively change colour, or the instruction could become progressively filled with a colour. A contrast between the instruction and a background e.g. of a background within a navigation instruction panel or an underlying part of a displayed map may be increased, by changing the colour or intensity of colour of either or both of the navigation instruction and its background. Other possibilities are envisaged. The shape of the instruction may be changed. The instruction may be caused to move e.g. within or with an instruction panel. The movement may be caused to increase in frequency and/or amplitude as the location is neared. These are merely examples of the possible enhancements that may be applied. Any combination of enhancements may be used. It will be appreciated that a navigation instruction panel containing a navigation instruction which loses transparency as in the Figure 7 embodiment, may also lose transparency to become more opaque. This may intensify the perceived change in the navigation instruction arrow.

Rather than comprising an arrow, the navigation instruction that is enhanced could alternatively or additionally comprise a text based instruction, which may include letters, symbols or numbers, or combinations thereof in any language.

Some additional effects may be applied once a navigation instruction has reached a final enhanced state, as shown in Figure 6C for example, it may undergo a further change to reinforce the instruction. For example, the arrow may change colour as in the Figure 7 embodiment, or may bounce. The arrow or the instruction panel may flash.

The position of the navigation instruction could additionally be caused to move across the display. For example, the instruction could move to a central part of the display as the junction is neared. This would occlude part of the displayed map, engaging a driver's attention even more.

The display as a whole may undergo a change to reinforce the instruction at or close to the location. In preferred embodiments a fish eye effect is applied to emphasis the part of the display including the instruction at the expense of the distance view.

The distance from the junction from which the navigation instruction starts to be enhanced, the rate of enhancement, and the distance from the junction at which it reaches its final level of enhancement may be determined as required. This may depend upon the speed of travel of the driver. The driver may be able to specify this via a setting of the PND. For example, older users may wish the enhancement to start earlier and escalate more rapidly. In one example, in which the navigation instruction is caused to increase in size, this may start to occur 300 m before the junction where the turn is to be performed, and the navigation instruction may reach its full size for example at 30 m before the turn. In the embodiments of Figures 7A to 7D, the final state of the navigation instruction is reached 150 m before the junction where the left turn is to be performed. This is merely exemplary. For example a final state may be reached closer to a junction, such as 50 m or even 10 m before the junction.

Although not shown in Figures 6A to 6C or Figures 7A to 7D, once the junction has been passed, the navigation instruction panel and any other parts of the navigation instruction still present should return to their original state prior to enhancement e.g. original size or transparency, even if the distance to a junction or other location where a next manoeuvre is to be performed is only short. This helps the user to recognise when a new instruction is provided. The process of increasing the size of the navigation instruction or otherwise changing its appearance may then start again, this time with decreasing distance to the next junction or other location. The enhancement of the instruction may need to occur at a greater rate if little distance remains to the next junction.

In embodiments, rather than being a navigation instruction, a warning is enhanced as a location is neared. The location is a location to which the warning refers. For example, in embodiments not encompassed by the wording of the claims but are considered as useful for understanding the invention, a warning might be a warning regarding a dangerous bend, or an accident hotspot. The warning may be enhanced as the current location approaches the physical location of the dangerous bend or accident hot spot. Another possibility, in embodiments not encompassed by the wording of the claims but considered as useful for understanding the invention, might be that a user has requested that alerts be provided regarding the presence of a particular type of point of interest (POI), for example a petrol station. An alert may be provided when the driver is within a given distance of the POI, being enhanced as the distance to the POI location decreases. In embodiments of the invention, the warning is a warning regarding a safety camera located at the location or a speed limit change at the location.

An embodiment in which the warning is a warning regarding a safety camera location will now be described with respect to Figures 8A and 8B. In this embodiment, a visual warning regarding the presence of a safety camera at a given location is enhanced as the location of the camera is approached. The warning includes information regarding the speed limit which must be observed, and a current speed.

Figure 8A illustrates an initial warning which may provided in the bottom left hand corner of the display in the region 40. Figure 8A shows the display at a distance of 950m from the safety camera. The warning includes a graphical indication in the form of a symbol representing a safety camera 41. The warning also includes an indication 42 showing the maximum allowed speed at the safety camera, here being 60 Km per hour, and finally an indication 43 as to the current speed of travel being 53 Km per hour. An indication 45 is given regarding the distance remaining until safety camera is reached. Other information, such as the type of safety camera may also be provided.

Rather than providing such comprehensive information regarding the safety camera, a simple safety camera warning could simply show the safety camera icon, and/or the speed limit where the safety camera is provided. However, by providing details of a current speed, the maximum allowed speed, and the distance to the safety camera, the user is provided with enhanced understanding of any steps they need to take to ensure that they comply with the speed limit by the time they reach the camera, or otherwise maintain an appropriate speed to comply with the speed limit.

Figure 8B shows the display when the user is only 50 m from the safety camera. It may be seen that the element of the warning 43 denoting the current speed has been enhanced to have a reduced transparency relative to background, and has increased in size, as well as changing in font. A background panel 50 has been provided to enhance the visibility of the display. In addition, now a further piece of information 48 is provided, being the amount by which the user is exceeding the speed limit. In Figure 8A the user is within the speed limit so this information is not present. Such additional information might be provided if the user is driving more than 5 Km per hour or some other threshold above the speed limit. This further indication may itself be subject to enhancement if the user continues to speed.

It will be appreciated that the distances are distances represented on a digital map, and the enhancement of the warning occurs with decreasing distance of a current GPS position of the PND from the location of the safety camera on the digital map.

Although only two snapshots of the display are shown, it will be appreciated that the enhancements occur continually or in a stepped manner involving a plurality of discrete steps as the safety camera is approached. In particular the increase in size of the current speed indication occurs continually or in a series of steps. The enhancement may be increased at a greater rate or provided to a greater degree if the driver exceeds the speed limit. For example, if the driver continues to drive in excess of the speed limit as they near the safety camera from the position of Figure 8b, the current speed and the indication regarding the amount by which the driver is exceeding the speed limit may grow further and/or change colour. The background panel may change colour e.g. turn red.

In addition to the visual signal, an audible signal which may be a spoken instruction or audible signal may be provided to inform the user that a safety camera will be passed. This instruction may additionally be enhanced as the location safety camera is neared, or may be provided without enhancement e.g. when the warning first appears, or close to the camera, if a speed exceeds the limit etc. An audible signal could be a beep or beeps.

In embodiments, a degree of enhancement and/or a rate of enhancement of a part of the warning, such as the current speed indication, is determined not only by distance with respect to the camera location, but also by reference to the current speed of travel relative to the maximum allowed speed at the camera. For example, an enhancement could be provided involving increasing a size of the current speed indication such that the size of the indication relative to a size reached in the final state i.e. at the location of the speed camera is greater for a given distance from the camera when a current speed exceeds a speed limit by a greater amount or of a maximum size. Some exemplary values are given below. The % values refer to the size of the current speed indication relative to a maximum size attainable. It will be seen that the size starts to increase further from the camera the greater the amount that the current speed exceeds the limit, and increases more rapidly for greater excess speed. The indication may be provided for lower speeds, or may be provided only closer to the camera. In this example, when the distance to the camera is 250m and current speed only exceeds the limit by 2-5 km/h, the current speed is not shown. In some examples, rather than showing the current speed, a simple camera symbol may be shown for distances further from the camera where speeds are not excessive. If the speed does not exceed the limit display of the current speed may be deferred until closer to the camera, and may not be enhanced in a continual or stepped manner.

**Table 1**

| **Distance** | **Relative (current - allowed ) speed in km/h** | | | |
|---|---|---|---|---|
| | **2<x<5** | **5<x<10** | **10 < x < 15** | **> 15** |
| 50 meter | 80% | 100% | 100 % | 100 % |
| 100 meter | 60% | 80% | 100 % | 100 % |
| 150 meter | 40% | 60% | 80% | 100 % |
| 200 meter | 20% | 40% | 60% | 60% |
| 250 meter | Not shown | 20% | 20% | 20% |

It will be appreciated that the 250m distance from the camera location at which enhancement commences is exemplary, and could be set by a user to a desired value. Likewise an "ahead" warning such a beep may be set to be provided at any given distance, such as 1km before the camera.

Currently PNDs may provide an audible warning regarding the presence of a safety camera within a given distance. On hearing such an audible warning, user will typically scan the PND to try to read the information about their current speed and the allowed speed at the speed camera. However, such information is often dispersed over the display and not immediately identifiable. A user will often brake automatically when hearing the audible warning whether or not they need to do so. This behaviour is undesirable, as it may lead to shockwaves and disruption to traffic flow. The embodiments of the invention provide a clearer warning to the user regarding the presence of the safety camera, and allows them to identify how close they are to it without needing to try to extract this information from different parts of a display. The user will recognise that as the warning changes, e.g. increases in size they are nearing the safety camera. In embodiments, information allowing a driver to more easily determine what action needs to be taken in response to the presence of the speed camera is displayed in a simpler manner i.e. information regarding their speed relative to the allowed speed. This additional information may be enhanced in a stepped or continuous manner if a user continues to speed as they get close to the camera.

Similar techniques to those described above may be provided in relation to other types of warning.

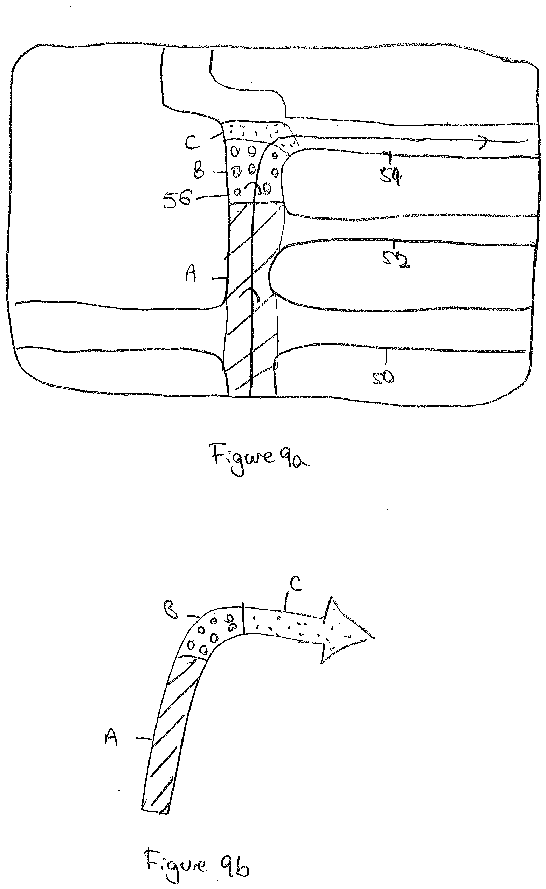

A further preferred feature of embodiments not encompassed by the wording of the claims but are considered as useful for understanding the invention will now described by reference to Figure 9A.

Figure 9A, not encompassed by the wording of the claims but considered as useful for understanding the invention, illustrates a road section including three side roads (50, 52, 54) branching off from a main road (56). According to a calculated route, the user needs to take the third of the side roads (54) as indicated by the sketched route.

It will be understood that there could be some confusion arising in this situation if the user is simply told to turn off in a given number of meters for example. The user may not be able to readily determine which of the roads (50, 52, 54) should be taken. In this example, in the part of the road shaded with cross hatching, section "A", an instruction to turn right could be misinterpreted. The user might think this applied to side road (50, 52) rather than (54). In the next region shaded with circles, region "B", an instruction to turn right would not open to misinterpretation as road 54 the next turning possibility. In the region C, shaded with dots, it is essential that the user makes the turn.

According to embodiments not encompassed by the wording of the claims but are considered as useful for understanding the invention, as the navigation instruction, for example an arrow symbol, changes as the junction between roads (56, 54) is approached, the user will be able to identify when they are close to the junction where they must take an action. Rather than changing the appearance of the navigation instruction, e.g. enlarging it or changing its colour/transparency merely in response to the decreasing distance to the junction, in preferred embodiments the map features in the region are also taken into account to determine when to increase the level of enhancement. Thus in this embodiment the appearance of the navigation instruction is changed after each of the preceding side roads has been passed.

As shown in Figure 9B, not encompassed by the wording of the claims but considered as useful for understanding the invention, in this case a navigation instruction in the form of a right-hand arrow can be enhanced progressively taking into account in which of the regions "A", "B" and "C" a current position lies. In this example, the enhancement of the arrow consists of a filling up of the arrow with a colour. The first section to be filled, labelled section "A" can be filled when the current position of the driver is in the cross hatch shaded section of the road labelled "A" according to Figure 9A. At circle shaded section "B", the next section of the arrow, section "B" would be filled. Finally, when the current position of the driver is in section dot shaded region "C" and in close proximity to the junction, a final portion "C" of the arrow will be filled. The filling could be in the form of different types of shading, different colours etc., associated with the portions "A", "B" and "C". Alternatively, the filling could be formed from the same colour which progressively fills more of the arrow. It will be seen that the change in enhancement of the arrow is linked not only to the distance from the junction in this case, but also to the underlying map features in order to reduce scope or confusion by the user. Similar techniques could be applied to other types of enhancements such as an increase in the size of the arrow, changing its transparency etc, which may be increased taking into account map features.

While the above description has been provided in relation to the case in which the navigation instruction, warning or alert is in the form of a visual instruction, similar techniques, not encompassed by the wording of the claims but considered as useful for understanding the invention, can be applied to an instruction, warning or alert which is audible. Such a signal may be used alone or in conjunction with a visual instruction, warning or alert. Audible embodiments, not encompassed by the wording of the claims but are considered as useful for understanding the invention, are particularly applicable to warnings or alerts. An audible instruction, warning or alert could include a signal such as a beep, or a spoken instruction. An audible instruction, warning or alert could be enhanced by causing a frequency at which the instruction, warning or alert is provided as the location is neared e.g. by increasing a frequency that an intermittent signal is provided e.g. beep, or providing more frequent spoken instructions etc. Another way in which an audible instruction, warning or alert may be enhanced would be to increase the volume thereof. In the case of a spoken instruction, warning or alert, an enhancement could comprise a change to the phrasing of the instruction, warning or alert. For example, initially softer commands may be used, which become more of an imperative as a junction is approached. While close to the junction, an audible navigation instruction may state "take the exit", an earlier instruction about the same manoeuvre might state "later on, you can leave the highway", and an intermediate instruction might be "start to prepare to leave the highway".

It will be appreciated that the enhancement of the warning in any of the embodiments occurs as a current GPS position of the PND approaches a given location on a digital map, i.e. with decreasing distance as indicated on the digital map.

If the display is suffering from glare and reflection, the techniques of the invention may additionally be useful in reducing the problem associated with the glare and reflection. The change in appearance of a visual warning may help to increase the visibility of thereof, reducing the significance of glare and reflection. A fish eye effect can also be helpful. The present invention may avoid the need to increase screen size or resolution to improve visibility of information being displayed.

If desired, to further facilitate interpretation of a visual display, steps may additionally be taken to reduce glare and reflection, for example by adjusting map rendering e.g. using a colour scheme for circumstances where glare and reflection are deemed to be present. An anti-glare colour scheme could make use of highly saturated colours that are rich in contrast. A transition from a normal colour scheme to an anti-glare colour scheme may be caused to occur gradually, and conversely disappear gradually if circumstances improve. Conditions of glare and reflection may be detected in any manner. For example the output of a light sensor may be used in conjunction with information regarding the direction of travel and the time of day, and potentially time of year. A threshold may be set to trigger the anti-glare settings. In other embodiments, a user could simply select the anti-glare setting as they might select a night colour setting.

It will also be appreciated that whilst various aspects and embodiments of the present invention have heretofore been described, the scope of the present invention is not limited to the particular arrangements set out herein and instead extends to encompass all arrangements, and modifications and alterations thereto, which fall within the scope of the appended claims.

For example, whilst embodiments described in the foregoing detailed description refer to GPS, it should be noted that the navigation device may utilise any kind of position sensing technology as an alternative to (or indeed in addition to) GPS. For example, the navigation device may utilise other global navigation satellite systems, such as the European Galileo system. Equally, it is not limited to satellite-based systems, but could readily function using ground-based beacons or other kind of system that enables the device to determine its geographic location.

It will also be well understood by persons of ordinary skill in the art that whilst the preferred embodiment may implement certain functionality by means of software, that functionality could equally be implemented solely in hardware (for example by means of one or more SICs (application specific integrated circuit)) or indeed by a mix of hardware and software.

## Claims

1. A method comprising:
providing, to a user via a navigation apparatus (200), a visual warning regarding presence of a safety camera or a speed limit change at a given location on a digital map, the visual warning including information regarding a current speed of travel (43) and/or a maximum permitted speed of travel (42) at the given location;
monitoring a current position of the navigation apparatus;
monitoring a remaining distance between the current position and the given location;
determining that the remaining distance between the current position and the given location decreased to a predetermined distance; and
enhancing the visual warning in a stepped manner as the remaining distance decreases by triggering an enhancement of the visual warning in response to said determining, wherein the enhancement is achieved by changing the appearance of the visual warning on a display of the navigation apparatus, and wherein a degree and/or rate of enhancement of the visual warning depends on:
a relative difference between the current speed and the maximum permitted speed of travel at the given location, and
a distance between a current location of the navigation apparatus and the given location.

2. The method of claim 1, wherein the enhancement is greater if the current speed exceeds the maximum permitted speed, in comparison to when the current speed does not exceed the maximum permitted speed.

3. The method of any preceding claim, wherein the visual warning is enhanced until it reaches a final state, the final state being reached at or in close proximity to the given location.

4. The method of any preceding claim, wherein the predetermined distance is a first predetermined distance, and wherein the method further comprises:
determining that the remaining distance between the current position and the given location has further decreased to a second predetermined distance, and
triggering a further enhancement of the visual warning in response to said determining.

5. The method of any preceding claim, wherein enhancing the visual warning comprises one or more of:
changing a transparency of at least a part of the visual warning,
increasing a size of at least a part of the visual warning,
changing the colour or intensity of colour of at least a part of the visual warning,
increasing a contrast of at least a part of the visual warning with respect to a background of the visual warning, and
changing a shape of at least a part of the visual warning.

6. The method of any preceding claim, wherein the method further comprises applying a fish eye effect to a part of the display including the enhanced visual warning.

7. The method of any preceding claim, wherein the method further comprises moving at least part of the enhanced visual warning across the display.

8. A navigation apparatus (200) comprising:
a display (240) for displaying a digital map to a user,
means (210, 230) for accessing digital map data and causing a digital map to be displayed to a user via the display,
a user interface (220) operable by a user to enable the user to interact with the apparatus,
means (210, 240) for providing a visual warning regarding presence of a safety camera or a speed limit change at a given location on the digital map, the visual warning including information regarding a current speed of travel and/or a maximum permitted speed of travel at the given location,
means (210, 250) for monitoring a current position of the navigation apparatus;
means (210) for monitoring a remaining distance between the current position and the given location;
means (210) for determining that the remaining distance between the current position and the given location decreased to a predetermined distance; and
means (210, 240) for enhancing the visual warning in a stepped manner as the remaining distance decreases by triggering an enhancement of the visual warning in response to said determining, wherein the enhancement is achieved by changing the appearance of the visual warning on the display, and wherein a degree and/or rate of enhancement of the visual warning depends on:
a relative difference between the current speed and the maximum permitted speed of travel at the given location, and
a distance between a current location of the navigation apparatus and the given location.

9. A computer program product comprising computer readable instructions that, when executed by one or more processors (210) of an apparatus (200), cause the apparatus to perform a method according to any one of claims 1 to 7.

## Patentansprüche

1. Verfahren, aufweisend:
Bereitstellen einer visuellen Warnung für einen Benutzer über ein Navigationsgerät (200) bezüglich des Vorhandenseins einer Überwachungskamera oder einer Änderung der Geschwindigkeitsbegrenzung an einem gegebenen Standort auf einer digitalen Karte, wobei die visuelle Warnung Informationen bezüglich einer aktuellen Reisegeschwindigkeit (43) und/oder einer maximal zulässigen Reisegeschwindigkeit (42) an dem gegebenen Standort enthält;
Überwachen einer aktuellen Position des Navigationsgeräts;
Überwachen, ob eine verbleibende Entfernung zwischen der aktuellen Position und dem gegebenen Standort auf eine vorbestimmte Entfernung abgenommen hat; und
Verstärken der visuellen Warnung in einer gestuften Art und Weise, wenn die verbleibende Entfernung abnimmt, durch Auslösen einer Verstärkung der visuellen Warnung als Reaktion auf die genannte Bestimmung, wobei die Verstärkung durch Ändern des Erscheinungsbildes der visuellen Warnung auf einer Anzeige des Navigationsgerätes erreicht wird, und wobei ein Grad und/oder eine Rate der Verstärkung der visuellen Warnung abhängt von:
einer relativen Differenz zwischen der aktuellen Reisegeschwindigkeit und der maximal zulässigen Reisegeschwindigkeit an dem gegebenen Standort, und einer Entfernung zwischen einem aktuellen Standort des Navigationsgerätes und dem gegebenen Standort.

2. Verfahren nach Anspruch 1, **dadurch gekennzeichnet, dass** die Verstärkung größer ist, wenn die aktuelle Reisegeschwindigkeit die maximal zulässige Reisegeschwindigkeit überschreitet, im Vergleich dazu, wenn die aktuelle Reisegeschwindigkeit die maximal zulässige Reisegeschwindigkeit nicht überschreitet.

3. Verfahren nach einem der vorhergehenden Ansprüche, **dadurch gekennzeichnet, dass** die visuelle Warnung verstärkt wird, bis sie einen Endzustand erreicht, wobei der Endzustand an oder in unmittelbarer Nähe des gegebenen Standortes erreicht wird.

4. Verfahren nach einem der vorhergehenden Ansprüche, **dadurch gekennzeichnet, dass** die vorbestimmte Entfernung eine erste vorbestimmte Entfernung ist und wobei das Verfahren ferner Folgendes aufweist:
Bestimmen, dass die verbleibende Entfernung zwischen der aktuellen Position und dem gegebenen Standort weiter auf eine zweite vorbestimmte Entfernung abgenommen hat, und
Auslösen einer weiteren Verstärkung der visuellen Warnung als Reaktion auf die genannte Bestimmung.

5. Verfahren nach einem der vorhergehenden Ansprüche, **dadurch gekennzeichnet, dass** die Verstärkung der visuellen Warnung eines oder mehrere der Folgenden aufweist:
Ändern einer Transparenz zumindest eines Teils der visuellen Warnung,
Vergrößern einer Größe von mindestens einem Teil der visuellen Warnung,
Ändern der Farbe oder Farbintensität zumindest eines Teils der visuellen Warnung,
Vergrößern eines Kontrasts von mindestens einem Teil der visuellen Warnung in Bezug auf einen Hintergrund der visuellen Warnung, und
Ändern einer Form zumindest eines Teils der visuellen Warnung.

6. Verfahren nach einem der vorhergehenden Ansprüche, **dadurch gekennzeichnet, dass** das Verfahren ferner das Anwenden eines Fischaugeneffekts auf einen Teil der die verstärkte visuelle Warnung enthaltenden Anzeige aufweist.

7. Verfahren nach einem der vorhergehenden Ansprüche, **dadurch gekennzeichnet, dass** das Verfahren ferner das Bewegen mindestens eines Teils der verstärkten visuellen Warnung über die Anzeige aufweist.

8. Navigationsgerät (200) aufweisend:
eine Anzeige (240) zum Anzeigen einer digitalen Karte für einen Benutzer,
Mittel (210, 230) zum Zugreifen auf digitale Kartendaten und zum Bewirken, dass eine digitale Karte einem Benutzer über die Anzeige angezeigt wird,
eine von einem Benutzer bedienbare Benutzerschnittstelle (220), um es dem Benutzer zu ermöglichen, mit der Navigationsgerät zu interagieren,
Mittel (210, 240) zum Bereitstellen einer visuellen Warnung bezüglich des Vorhandenseins einer Überwachungskamera oder einer Änderung der Geschwindigkeitsbegrenzung an einem gegebenen Standort auf einer digitalen Karte,
wobei die visuelle Warnung Informationen bezüglich einer aktuellen Reisegeschwindigkeit (43) und/oder einer maximal zulässigen Reisegeschwindigkeit (42) an dem gegebenen Standort enthält,
Mittel (210, 250) zum Überwachen einer aktuellen Position des Navigationsgeräts;
Mittel (210) zum Überwachen, ob eine verbleibende Entfernung zwischen der aktuellen Position und dem gegebenen Standort auf eine vorbestimmte Entfernung abgenommen hat; und
Mittel (210, 240) zum Verstärken der visuellen Warnung in einer gestuften Art und Weise, wenn die verbleibende Entfernung abnimmt, durch Auslösen einer Verstärkung der visuellen Warnung als Reaktion auf die genannte Bestimmung, wobei die Verstärkung durch Ändern des Erscheinungsbildes der visuellen Warnung auf einer Anzeige des Navigationsgerätes erreicht wird, und wobei ein Grad und/oder eine Rate der Verstärkung der visuellen Warnung abhängt von:
einer relativen Differenz zwischen der aktuellen Reisegeschwindigkeit und der maximal zulässigen Reisegeschwindigkeit an dem gegebenen Standort, und
einer Entfernung zwischen einem aktuellen Standort des Navigationsgerätes und dem gegebenen Standort.

9. Computerprogrammprodukt, aufweisend computerlesbare Anweisungen, die, wenn sie von einem oder mehreren Prozessoren (210) eines Navigationsgerätes (200) ausgeführt werden, das Navigationsgerät veranlassen, ein Verfahren nach einem der Ansprüche 1 bis 7 auszuführen.

## Revendications

1. Un procédé comprenant :
le fait de fournir, à un utilisateur via un appareil de navigation (200), un avertissement visuel concernant la présence d'un radar ou d'un changement de limitation de vitesse à un emplacement donné sur une carte numérique, l'avertissement visuel comprenant des informations concernant une vitesse de déplacement actuelle (43) et/ou une vitesse de déplacement maximale autorisée (42) à l'emplacement donné ;
le fait de surveiller une position actuelle de l'appareil de navigation ;
le fait de surveiller une distance restante entre la position actuelle et la position donnée ;
le fait de déterminer que la distance restante entre la position actuelle et l'emplacement donné a diminué jusqu'à une distance prédéterminée ; et
le fait de renforcer l'avertissement visuel de manière échelonnée au fur et à mesure que la distance restante diminue en déclenchant un renforcement de l'avertissement visuel en réponse à ladite détermination, le renforcement étant obtenu en changeant l'apparence de l'avertissement visuel sur un écran de l'appareil de navigation, et un degré et/ou une vitesse de renforcement de l'avertissement visuel étant fonction :
d'une différence relative entre la vitesse actuelle et la vitesse de déplacement maximale autorisée à l'emplacement donné, et
d'une distance entre un emplacement actuel de l'appareil de navigation et l'emplacement donné.

2. Le procédé selon la revendication 1, dans lequel le renforcement est plus important si la vitesse actuelle dépasse la vitesse maximale autorisée, par rapport à quand la vitesse actuelle ne dépasse pas la vitesse maximale autorisée.

3. Le procédé selon l'une quelconque des revendications précédentes, dans lequel l'avertissement visuel est renforcé jusqu'à ce qu'il atteigne un état final, l'état final étant atteint à ou à proximité immédiate de l'emplacement donné.

4. Le procédé selon l'une quelconque des revendications précédentes, dans lequel la distance prédéterminée est une première distance prédéterminée, et dans lequel le procédé comprend en outre :
le fait de déterminer que la distance restante entre la position actuelle et la position donnée a encore diminué jusqu'à une deuxième distance prédéterminée, et
le fait de déclencher un autre renforcement de l'avertissement visuel en réponse à ladite détermination.

5. Le procédé selon l'une quelconque des revendications précédentes, dans lequel le renforcement de l'avertissement visuel comprend un ou plusieurs parmi :
le fait de changer une transparence d'au moins une partie de l'avertissement visuel,
le fait d'augmenter une taille d'au moins une partie de l'avertissement visuel,
le fait de changer la couleur ou l'intensité de couleur d'au moins une partie de l'avertissement visuel,
le fait d'augmenter un contraste d'au moins une partie de l'avertissement visuel par rapport à un fond de l'avertissement visuel, et
le fait de changer une forme d'au moins une partie de l'avertissement visuel.

6. Le procédé selon l'une quelconque des revendications précédentes, dans lequel le procédé comprend en outre le fait d'appliquer un effet oeil de poisson à une partie de l'écran comprenant l'avertissement visuel renforcé.

7. Le procédé selon l'une quelconque des revendications précédentes, dans lequel le procédé comprend en outre le fait de déplacer au moins une partie de l'avertissement visuel renforcé sur l'écran.

8. Un appareil de navigation (200) comprenant :
un écran (240) pour afficher une carte numérique à un utilisateur,
des moyens (210, 230) pour accéder à des données de carte numérique et amener une carte numérique à être affichée à un utilisateur via l'écran,
une interface utilisateur (220) actionnable par un utilisateur pour permettre à l'utilisateur d'interagir avec l'appareil,
des moyens (210, 240) pour fournir un avertissement visuel concernant la présence d'un radar ou d'un changement de limitation de vitesse à un emplacement donné sur la carte numérique, l'avertissement visuel comprenant des informations concernant une vitesse de déplacement actuelle et/ou une vitesse maximale autorisée de se déplacer à l'endroit indiqué,
des moyens (210, 250) pour surveiller une position actuelle de l'appareil de navigation ;
des moyens (210) pour surveiller une distance restante entre la position actuelle et l'emplacement donné ;
des moyens (210) pour déterminer que la distance restante entre la position actuelle et l'emplacement donné a diminué jusqu'à une distance prédéterminée ; et
des moyens (210, 240) pour renforcer l'avertissement visuel d'une manière progressive lorsque la distance restante diminue en déclenchant un renforcement de l'avertissement visuel en réponse à ladite détermination, le renforcement étant obtenu en changeant l'apparence de l'avertissement visuel sur l'écran, et un degré et/ou une vitesse de renforcement de l'avertissement visuel étant fonction :
d'une différence relative entre la vitesse actuelle et la vitesse de déplacement maximale autorisée à l'emplacement donné, et
d'une distance entre un emplacement actuel de l'appareil de navigation et l'emplacement donné.

9. Un produit de programme informatique comprenant des instructions lisibles par ordinateur qui, lorsqu'elles sont exécutées par un ou plusieurs processeurs (210) d'un appareil (200), amènent l'appareil à mettre en oeuvre un procédé selon l'une quelconque des revendications 1 à 7.
